# EUROPÄISCHE PATENTSCHRIFT

(11) **EP 3 544 768 B1**
(45) Veröffentlichungstag und Bekanntmachung des Hinweises auf die Patenterteilung: **26.02.2025**
(21) Anmeldenummer: 17804511.8
(22) Anmeldetag: 20.11.2017
(51) Int. Cl.: B24B 55/12, B24C 9/00, B24D 3/34

(54) **VERFAHREN ZUR OBERFLÄCHENBEARBEITUNG UND VERWENDUNG EINES ADDITIVS**
METHOD FOR SURFACE TREATMENT AND USE OF AN ADDITIVE
PROCÉDÉ DE TRAITEMENT DE SURFACE ET UTILISATION D'UN ADDITIF

(30) Priorität: 23.11.2016 EP 16200167
(43) Veröffentlichungstag der Anmeldung: 02.10.2019
(73) Patentinhaber: Menzerna Polishing Compounds GmbH & Co. KG, 76470 Ötigheim (DE)
(72) Erfinder: MESSMER, Rudi, 76597 Loffenau (DE)
(74) Vertreter: Witte, Weller & Partner Patentanwälte mbB
(86) Internationale Anmeldenummer: PCT/EP2017/079743
(87) Internationale Veröffentlichungsnummer: WO 2018/095849

(56) Entgegenhaltungen:
- EP-A2- 1 726 364
- US-A- 2 031 362
- US-A1- 2008 066 512
- US-A1- 2011 219 704

## Beschreibung

Die vorliegende Offenbarung betrifft ein Verfahren zur Oberflächenbearbeitung eines Werkstücks mittels abrasiv wirksamer Mittel. Die Offenbarung befasst sich ferner mit dem Phänomen der leichten Entzündbarkeit bzw. sogar der Selbstentzündung von Abfallprodukten bei der Oberflächenbearbeitung. Daneben betrifft die Offenbarung ein Oberflächenbearbeitungsmittel zur Oberflächenbearbeitung eines Werkstücks. Die Offenbarung befasst sich mit Maßnahmen zur Reduktion einer Selbstentzündungsneigung von Abfallprodukten.

Aus der US 2008/066512 A1 ist eine Vorrichtung zur Kugelstrahlbehandlung bekannt, umfassend ein Gehäuse in dem ein Innenraum gebildet ist, einen beweglichen Schlitten, um ein in dem Innenraum zu behandelndes Objekt beweglich zu tragen, mindestens ein Ausstoßmittel zum Ausstoßen von Strahlmittelteilchen auf das von dem Schlitten getragene Objekt, ein Umlaufsystem mit einer Sammelebene, auf der die ausgestoßenen und heruntergefallenen Strahlmittelteilchen mit dem Umlaufsystem aufgesammelt werden, um die aufgesammelten Strahlmittelteilchen zu dem Ausstoßmittel zurückzuführen und sie im Umlauf zu halten und für den Ausstoß zu verwenden, und mindestens ein Entfernungsmittel zum Entfernen von Verunreinigungen von den Strahlmittelteilchen. Zu diesem Zweck ist ein Staubabscheider vorgesehen, um Staub zu sammeln, wobei dem Staub ein Zündunterdrückungsmittel beigemengt wird.

Aus der EP 1 726 364 A2 ist ein Zerkleinerungsverfahren für Späne oder Spänegemische sowie Presslinge aus Spänen aus Metallen oder Metalllegierungen bekannt, wobei das zu zerkleinernde Material in Gegenwart einer nicht brennbaren Flüssigkeit, vorzugsweise Wasser oder eine wässrige Lösung in einem Prallzerkleinerer, vorzugsweise einer Hammermühle zerkleinert wird.

Aus der US 2011/219704 A1 ist ein Verfahren zum Recycling eines Ceroxid-Schleifmittels, das beim Polieren eines Glasmaterials verwendet wird, bekannt, wobei das Verfahren die Zugabe einer starken Alkalilösung zu einem Aufschlämmungsabfall des Ceroxid-Schleifmittels, die Zugabe von Natriumfluorid zu dem Aufschlämmungsabfall, und die Trennung von im Schlammabfall enthaltenen Ceroxidpartikeln von anderen Partikeln umfasst.

Die US 2 031 362 A befasst sich mit der Herstellung und Anwendung von Schleifpapier, wobei auf Wasserbeständigkeit und verringerte Entzündungsneigung beim Schleifpapier selbst Wert gelegt wird.

Die vorliegende Offenbarung betrifft allgemein das Gebiet der Oberflächenbearbeitung, insbesondere das Gebiet der mechanischen Oberflächenbearbeitung. Sofern im Rahmen dieser Ausarbeitung der Begriff Oberflächenbearbeitung verwendet wird, sollen darunter vor allem Polierprozesse, Bürstprozesse, Schleifprozesse, Druckluftstrahlprozesse und ähnliche Material abtragende bzw. Oberflächen einebnende Prozesse verstanden werden. Ferner werden unter dem Begriff Oberflächenbearbeitung auch spanende Fertigungsverfahren verstanden, bei denen Werkstücke bearbeitet werden, wobei das abgetragene Material in Form von Spänen anfällt. Spanende Verfahren oder Zerspanverfahren sind beispielsweise das Drehen, Bohren, Fräsen und Schleifen. Polieren, Bürsten, Schleifen, Druckluftstrahlen mit Strahlgut und allgemein Zerspanverfahren können grundsätzlich als Untergruppen glättender Bearbeitungsverfahren aufgefasst werden. Bürstenanwendungen, Polieranwendungen, Strahlanwendungen, Schleifanwendungen und zerspanende Verfahren können sich technologisch teilweise überschneiden.

Allgemein dienen Polierverfahren, Bürstverfahren, Druckluftstrahlverfahren, Schleifverfahren und Zerspanverfahren dazu, die Oberflächenrauheit von Bauteilen zu verringern und vorzugsweise auf der Oberfläche des Bauteils Glanz zu erzeugen. Es sind auch Anwendungen denkbar, bei denen die Gratentfernung oder dgl. im Vordergrund steht. Der Übergang von einer Polierbearbeitung zu einer Schleifbearbeitung ist häufig fließend. Polieranwendungen sind häufig auf dem Gebiet der mechanischen Feinbearbeitung anzutreffen, insbesondere auf dem Gebiet der mechanischen Feinbearbeitung von Oberflächen.

Die vorliegende Offenbarung bezieht sich ferner insbesondere auf die Bereiche industrielles Schleifen, Drehen, Bohren, Fräsen, Bürsten, Druckluftstrahlen bzw. Polieren und vorzugsweise hochautomatisiertes Schleifen, Drehen, Bohren, Fräsen, Bürsten, Druckluftstrahlen und Polieren. Es sind Schleifeinrichtungen, Bürsteinrichtungen, Druckluftstrahleinrichtungen Fertigungseinrichtungen zum Zerspanen oder Poliereinrichtungen bekannt, die etwa Bearbeitungszellen umfassen, in denen einerseits die Oberflächenbearbeitungsvorrichtung selbst andererseits jedoch auch Elemente zum automatischen Zuführen zu bearbeitender Werkstücke vorgesehen sind. Beispielhaft können Handhabungseinrichtungen, wie etwa Roboter, Rundtaktmaschinen oder Flachbettpoliermaschinen, vorgesehen sein, die dazu ausgebildet sind, zu bearbeitende Werkstücke zu greifen und in Kontakt mit dem Bearbeitungswerkzeug zu bringen.

Hierbei ist es grundsätzlich unerheblich, ob das Werkstück und/oder das Werkzeug aktiv gegenüber dem anderen Element bewegt wird. Neben einer Werkstück geführten Bearbeitung ist auch eine Werkzeug geführte Bearbeitung bekannt. Hierbei wird das Werkstück in einer entsprechenden Aufnahme befestigt und dann durch das an einem bewegbaren Kopf aufgenommene Werkzeug bearbeitet. Diese Art der Bearbeitung findet beispielsweise Anwendung bei der Bearbeitung großer Werkstücke. Ferner können die Handhabungseinrichtungen dazu ausgestaltet sein, eine Relativbewegung zwischen dem Werkstück und dem Bearbeitungswerkzeug zu bewirken, um die gewünschten Bereiche des Werkstücks zu bearbeiten. Mit anderen Worten kann etwa ein Handhabungsroboter vorgesehen sein, der ein "manuelles" Verschwenken bzw. Verschieben des Werkstücks relativ zum (sich drehenden) Bearbeitungswerkzeug imitiert.

Als Mittel zur Oberflächenbearbeitung werden solche eingesetzt, die abrasiv wirksam sind, also etwa Schleifkörner aufweisen. Ein abrasiv wirksames Mittel ist beispielsweise ein Poliermittel, Bürstmittel, Strahlmittel oder Schleifmittel. Diese werden üblicherweise in definierten Darreichungsformen bzw. Zuständen angeboten. Es kann sich hierbei etwa um Feststoffe, Festpasten oder um Emulsionen handeln. Fernern können Poliermittel oder dergleichen etwa als Salben, Cremes und/oder Polituren vorliegen.

Im Rahmen dieser Offenbarung werden darüber hinaus unter abrasiv wirksamen Mitteln auch Teile eines Bearbeitungswerkzeuges verstanden. Bei diesen Teilen handelt es sich beispielsweise um solche, die nach der Bearbeitung ausgetauscht werden können, wie etwa Wendeschneidplatten. Das abrasiv wirksame Mittel kann aber auch ein Schneidstoff sein, der im Bearbeitungswerkzeug verbaut vorliegt, beispielsweise Werkzeugstahl, Hartmetall, Schneidkeramiken, Bornitrid oder Diamant.

Die vorliegende Offenbarung betrifft gemäß bespielhaften Ausführungsformen das Polieren. Polieren beruht regelmäßig auf verschiedenen Wirkprinzipien. Einerseits erfolgt beim Polieren ein gewisser Materialabtrag. Ferner werden beim Polieren regelmäßig Rauigkeitsspitzen einer Oberflächenstruktur des Werkstücks verformt und insbesondere eingeebnet. Ferner können beim Polieren Hohlräume bzw. Unebenheiten zumindest teilweise aufgefüllt werden.

Vorrichtungen zum Polieren umfassen beispielsweise eine Polierscheibe, einen Polierteller bzw. ein Polierband. Die Polierscheibe kann einen Trägerwerkstoff bereitstellen, der etwa aus natürlichen Werkstoffen (Naturfasern, Baumwolle, Sisal, Papier etc.) oder künstlichen Werkstoffen (Kunstfasern) hergestellt ist. Auch schwammartige Werkstoffe können für Polierscheiben verwendet werden. Üblicherweise erfolgt eine Polierbearbeitung dadurch, dass ein geeignetes Poliermittel auf die Polierscheibe aufgebracht wird. Aufgrund einer Relativbewegung zwischen der Polierscheibe und einem zu bearbeitenden Werkstück kann das Poliermittel mit dem Werkstück in Kontakt treten, um auf dieses bearbeitend, insbesondere glättend einzuwirken.

Polierscheiben, Bürsten oder ähnliche Polierwerkzeuge können Wirkbereiche aufweisen, die Stoffe wie etwa Baumwolle, Sisal, Polymere, Papiere, Filz, Leder oder ähnliche Bestandteile umfassen. Schleifscheiben weisen grundsätzlich härtere Materialien auf. Sie weisen häufig Metalle oder Keramikwerkstoffe auf. Allgemein kann die Scheibe (zum Polieren, Bürsten oder Schleifen) als Poliermittelträger bezeichnet werden. Das Schleifkorn kann etwa auf Basis von Tonerde, Korund, Aluminiumoxid, Aluminiumhydroxide, Aluminiumsilikate, Magnesium-Aluminium-Silikate, Calciumcarbonate, Chromtrioxid, Ceroxid, Quarz, Eisenoxid, Kieselerde oder ähnlich harten Werkstoffen gebildet sein.

Die vorliegende Offenbarung betrifft die Oberflächenbearbeitung von Werkstücken, deren zu bearbeitende Oberfläche bevorzugt aus Metallen bzw. Metalllegierungen, insbesondere aus Leichtmetallen, Leichtmetalllegierungen oder Buntmetallen bzw. Buntmetalllegierungen besteht. Beispielsweise bestehen die Oberflächen aus Magnesium, Aluminium, Titan, Eisen, Kupfer, Zink, und dgl., oder aus entsprechenden Legierungen, die diese enthalten, wie etwa Messing, Bronze, und dgl. Bei der Bearbeitung von Werkstücken kommt es zu einem Materialabtrag. Dabei wird beispielsweise die oberste Schicht der Oberfläche des Werkstücks abgetragen. Zumindest teilweise kann die Bearbeitung ein Einebnen umfassen. Ferner betrifft die Oberflächenbearbeitung auch das Zerspanen von Werkstücken, wobei nicht nur die Oberfläche abgetragen wird, sondern beispielsweise das Werkstück gefräst, gedreht oder gebohrt wird.

Ferner betrifft die vorliegende Offenbarung gemäß beispielhaften Ausführungsformen das Sandstrahlen. Allgemein wird unter dem Sandstrahlen der Vorgang verstanden, bei dem mittels Druckluftstrahlen mit festem Strahlmaterial die Oberfläche eines Werkstücks durch Einwirkung des Strahlmittels bearbeitet wird. Beispielsweise können als Strahlmittel Sand, Glasperlen, Glasgranulat, Korund, Edelkorund, Hartguss, Stahlguss, Edelstahl, Keramik, Kunststoff, Duroplast, Naturkern, Messinggries, Granatsand, Sibasiv oder andere entsprechende Strahlmittel verwendet werden. Bei der Oberflächenbearbeitung mittels Sandstrahl bleibt Strahlschutt zurück, welcher zusammen mit dem abgetragenen Material als Abfall anfällt. Das abgetragene Material fällt je nach verwendetem Strahlmittel häufig als Staub an, welcher zu Staubexplosionen führen kann. Um diese Staubexplosion zumindest teilweise einschränken zu können, wird das Strahlgut zusammen mit dem entstehenden Abfall häufig in einem Nassabscheider aufgefangen. Trotz dieser Maßnahme kommt es weiterhin häufig zu unerwünschten Bränden innerhalb des Nassabscheiders.

Es wurde beobachtet, dass Ansammlungen von Abfällen wie etwa Schleifabfällen, Bürstabfällen, Strahlmittelabfällen, Zerspanabfälle oder Polierabfällen, insbesondere solche Abfälle, die bei der Bearbeitung von Metallen, insbesondere Leichtmetallen, anfallen, leicht entzündbar sind. Dies kann im Extremfall sogar zur Selbstentzündung der Abfälle führen. Je nachdem um welche Abfallprodukte es sich handelt, die bei der Oberflächenbearbeitung anfallen, können sich die Abfallprodukte zu unterschiedlichen Zeitpunkten innerhalb des Oberflächenbearbeitungsverfahrens entzünden. Beispielsweise neigen Polierabfälle, welche aus Leichtmetallstäuben vermischt mit Poliermittel und Wasser bestehen, leicht zu einer Selbstentzündung. Hierbei erwärmt sich der Abfall von selbst, beispielsweise durch ablaufende Oxidationen oder andere Reaktionen zwischen den einzelnen Bestandteilen des Abfalls (Metallstäube, Metallspäne, Fette, Öle, Wachse, etc.), die zur Erwärmung und schließlich zur Selbstentzündung des Abfalls führen, insbesondere dann, wenn keine ausreichende Wärmeabfuhr gegeben ist. Derartige Abfälle werden üblicherweise über einen gewissen Zeitraum gesammelt und einer Entsorgung zugeführt. Häufig werden solche Abfälle auf dem Betriebsgelände abseits von anderen Einrichtungen gelagert, damit im Falle eines Brandes möglichst keine Kollateralschäden entstehen.

Handelt es sich bei den Abfallprodukten um Metallstäube, welche beispielsweise bei der Strahlbearbeitung anfallen, sind diese Stäube aus der Umgebungsluft zu entfernen. Bei derartigen Verfahren sollten Grenzwerte für den Staubanteil innerhalb der Luft eingehalten werden. Zur Entstaubung der Luft kann beispielsweise ein Nassabscheider eingesetzt werden, hierbei werden die entstehenden Stäube in Wasser gebunden. Nassabscheider bieten neben der Entstaubung der Luft den weiteren Vorteil, dass Staubexplosionen der Metallstäube eingedämmt werden können. Jedoch können die Metalle mit Wasser unter Bildung von hochentzündlichem Wasserstoff reagieren, der wiederrum ein brennbares Gas darstellt.

Allgemein wird die Auffassung vertreten, dass die Entzündung derartiger Schleifabfälle, Bürstabfälle, Strahlabfälle, Zerspanabfälle und Polierabfälle nicht hundertprozentig vermeidbar sind. Dies zeigt sich auch darin, dass selbst in hochentwickelten Ländern mit hohen Sicherheitsanforderungen solche Brände dokumentiert sind.

Vor diesem Hintergrund liegt der Erfindung die Aufgabe zugrunde, ein Verfahren zur Oberflächenbearbeitung eines Werkstückes bereitzustellen, bei dem zumindest einige der vorstehend beschriebenen Nachteile vermindert, vorzugsweise vermieden werden können. Insbesondere soll das Verfahren möglichst dazu beitragen, die Selbstendzündungsneigung von Bearbeitungsabfällen, insbesondere Schleifabfällen, Bürstabfälle, Strahlabfällen, Zerspanabfälle oder Polierabfällen, zu reduzieren. Ferner liegt der Erfindung die Aufgabe zugrunde, ein Oberflächenbearbeitungsmittel, insbesondere ein Schleif-, Bürst- oder Poliermittel anzugeben, das möglichst die Selbstendzündungsneigung der Abfälle herabsetzt. Ferner sollen möglichst vorteilshafte Verwendungen geeigneter Additive angegeben werden.

Das Verfahren betreffend wird die Aufgabe der Erfindung durch ein Verfahren zur Oberflächenbearbeitung von Werkstücken mittels abrasiv wirksamer Mittel gelöst, wobei das Verfahren die folgenden Schritte umfasst:
- Bereitstellung eines Bearbeitungswerkzeuges;
- Bereitstellung eines abrasiv wirksamen Mittels;
- Zuführen eines Werkstücks mit einer zu bearbeitenden Oberfläche;
- Oberflächenbearbeitung des Werkstücks, umfassend einen Materialabtrag, wobei Abfallprodukte entstehen; und
- Aufbereitung der Abfallprodukte durch Benetzen der Abfallprodukte;
   wobei zumindest einer der genannten Schritte Folgendes umfasst:
   - Hinzufügung eines Additivs zur Herabsetzung einer Selbstentzündungsneigung der Abfallprodukte, wobei das Additiv ein Salz, aus einem Carbonat und/oder einem Halogenanion enthält.

Die Aufgabe der Erfindung wird auf diese Weise vollkommen gelöst.

Gemäß einem weiteren Aspekt betrifft die vorliegende Offenbarung ferner ein Verfahren zur Oberflächenbearbeitung von Werkstücken, wobei das Verfahren die folgenden Schritte umfasst:
- Bereitstellung eines Bearbeitungswerkzeuges;
- Zuführen eines Werkstücks mit einer zu bearbeitenden Oberfläche;
- Oberflächenbearbeitung des Werkstücks, umfassend einen Materialabtrag, wobei Abfallprodukte entstehen; und
- Aufbereitung der Abfallprodukte durch Benetzen der Abfallprodukte;
   wobei zumindest einer der genannten Schritte Folgendes umfasst:
   - Hinzufügung eines Additivs zur Herabsetzung einer Selbstentzündungsneigung der Abfallprodukte, wobei das Additiv ein Salz, aus einem Carbonat und/oder einem Halogenanion enthält.

Erfindungsgemäß kann durch Beimengen des Additivs die Selbstentzündungsneigung der entstehenden Abfallprodukte herabgesetzt werden, indem die Reaktivität der potentiell gefährdeten Bestandteile des Abfalls herabgesetzt wird. Zu diesem Zweck wird das Additiv, welches ein Salz aus Carbonaten und/oder Halogenanionen enthält, in zumindest einem der Teilschritte des Verfahrens hinzugefügt. Durch das Benetzen der Abfallprodukte kann sich das Additiv in dem Lösungsmittel, welches zum Benetzen verwendet wird, beispielsweise Wasser, lösen und mit den Bestandteilen des Abfalls reagieren.

Hierbei ist es zunächst unerheblich, auf welche Art und Weise das Additiv beigemengt wird, solange das Additiv in gewünschter Weise dann in den Abfallprodukten vorhanden ist bzw. mit einem Bestandteil des Abfalls abreagieren kann.

Sofern im Rahmen dieser Offenbarung von der Zuführung eines Werkstücks mit einer zu bearbeitenden Oberfläche die Rede ist, so ist hiervon jede Art der relativen Zuführbewegung abgedeckt. Mit anderen Worten kann es sich hierbei um eine Bewegung des Werkzeugs und/oder eine Bewegung des Werkstücks handeln.

Es wurde erkannt, dass die Brände bzw. Selbstentzündungen auf speziellen Eigenschaften der Abfallprodukte und Wirkmechanismen zurückzuführen sind. Dies beinhaltet auch eine Abkehr von bislang allgemein vertretenen Theorien zu den Ursachen für die Häufigkeit von Bränden von Abfallprodukten der Oberflächenbearbeitung, insbesondere der Polierbearbeitung, Bürstbearbeitung, Schleifbearbeitung, Zerspanverfahren, Druckstrahlbehandlung und ähnlicher materialabtragender oder glättender Bearbeitungsverfahren.

Ausgehend vom Werkstück können Abfallprodukte in Form von Metallspänen und Metallstaub anfallen. Die entstehenden Metallstäube können Partikel aufweisen, die teilweise kleiner als 500 µm sind. Metallspäne, welche insbesondere beim spanender Bearbeitung anfallen, wie beispielsweise beim Schleifen, Drehen, Bohren oder Fräsen, sind aus entsprechend größeren Partikeln zusammengesetzt. Die Stäube sowie die Späne sind außerordentlich reaktiv und neigen dazu, sich unter großer Wärmeentwicklung mit dem Sauerstoff der Umgebungsluft zu verbinden. Hierbei kann es auch zu sogenannten Staubexplosionen kommen. Um Staubexplosionen weitestgehend einzuschränken können die Staubabfälle mit einem Lösungsmittel, beispielsweise Wasser, aufgefangen werden. Dabei reagieren die Metallstäube mit dem Lösungsmittel. Dabei bildet sich jedoch hochentzündlicher Wasserstoff, der wiederrum mit dem Luftsauerstoff in einer sogenannten Knallgasreaktion abreagieren kann. Der hochentzündliche Wasserstoff kann aber auch durch umgebende Wärmequellen entzündet werden. Demnach kann von sämtlichen Abfallprodukten eine erhöhte Brandgefahr ausgehen. Diese ist abhängig von der Art des Metalls, der Konzentration und von der Partikelgröße.

Neben den Staubpartikeln des Werkstücks fallen weitere Abfallprodukte beim Bearbeiten von Oberflächen an, von denen wiederrum eine erhöhte Brandgefahr ausgehen kann. Diese können einen Abrieb des Bearbeitungswerkzeuges umfassen, zum anderen Reste des abrasiv wirksamen Mittels. Üblicherweise kann davon ausgegangen werden, dass 20 % bis 50 % des abrasiv wirksamen Mittels bei der Bearbeitung schlichtweg weggeschleudert werden, so dass diese Menge direkt als Abfallprodukt anfällt. Dies hat zur Folge, dass das abrasiv wirksame Mittel beträchtlichen Anteil des Abfalls stellt.

Unter "abrasiv wirksamen Mitteln" werden im Rahmen dieser Offenbarung beispielsweise Feststoffpartikel, Schleifmittel, Schneidstoffe oder Strahlmittel verstanden. Abrasiv wirksame Mittel können beispielsweise in Poliermittel, Bürstmittel oder Schleifmitteln enthalten sein. Ferner können abrasiv wirksame Mittel auch Teil des Bearbeitungswerkzeuges selbst sein, vgl. beispielsweise Schneidstoffe wie Werkzeugstahl, Hartmetall, Schneidkeramiken, Bornitrid oder Diamant.

Unter "Abfallprodukten" werden im Rahmen dieser Offenbarung alle im Oberflächenbearbeitungsprozess entstehenden bzw. überflüssigen Teile verstanden, die nicht mit dem zu bearbeitenden Werkstück verbunden sind. Die verschiedenen Abfallprodukte werden beispielsweise gesammelt und durch Benetzen aufbereitet. Unter "Abfall" wird in diesem Zusammenhang die Summe der "Abfallprodukte" verstanden, die bei der Oberflächenbearbeitung anfallen, beispielsweise als Schlamm oder in Form von Briketts. Die Summe aller anfallenden Abfallprodukte bildet als Abfall insgesamt ein Gemisch aus potentiell brennbaren Materialien, was die Brandgefahr zusätzlich erhöhen kann. Als Abfallprodukte werden aber auch solche Produkte verstanden, welche innerhalb der Oberflächenbearbeitung durch Oxidation entstehen; beispielsweise hochentzündlicher Wasserstoff, der sich bei der Reaktion von Metallstäuben und Wasser bilden kann.

Üblicherweise werden die Abfallprodukte durch Benetzen aufgearbeitet; beispielsweise aus Entsorgungsgründen und/oder aus Sicherheitsgründen. Hierdurch wird die Staubfreisetzung unterbunden, etwa durch ein Niederschlagen der Stäube mittels Flüssigkeiten, um etwaige Reaktionen des metallischen Bestandsteils möglichst grundsätzlich zu unterbinden. Mögliche Aufbereitungsverfahren sind folgende: Nassverfahren; Trockenverfahren mit Nassabscheidung des Staubes durch sofortiges Benetzen des freiwerdenden Staubes; und Trockenverfahren mit Nassabscheidung des Staubes durch Benetzen des Staubes im Nassabscheider. Diese Verfahren sind beispielsweise durch Arbeitsschutzvorschriften geregelt und bilden einen ersten Aufbereitungsschritt für die entstehenden Abfallprodukte.

Bei Nassverfahren wird das Werkstück und/oder das Bearbeitungswerkzeug mit Wasser oder anderen geeigneten Kühlschmierstoffen, so benetzt, dass der entsprechende Abrieb als Schlamm bzw. Gemisch anfällt. Dabei können die Metallstäube und Metallspäne, welche vom Werkstück abgetragen werden, mit dem Wasser oder den anderen geeigneten Kühlschmierstoffen reagieren.

Bei Trockenverfahren mit Nassabscheidung der Abfallprodukte durch sofortiges Benetzen des freiwerdenden Abfalls wird dieser unmittelbar hinter der Entstehungsstelle durch Wasser, gegebenenfalls mit Entspannungszusätzen oder mit anderen geeigneten Flüssigkeiten so benetzt, dass er möglichst vollständig gebunden wird und als Schlamm bzw. als Gemisch anfällt. Bearbeitungsmaschine und Flüssigkeitszugabe sind so miteinander gekoppelt, dass ein Trockenbetrieb nicht möglich ist.

Bei Trockenverfahren mit Nassabscheidung der Abfallprodukte im Nassabscheider werden die anfallenden Abfallprodukte an der Entstehungsstelle möglichst vollständig abgesaugt und einem geeigneten Nassabscheider zugeführt.

Die vorgenannten Aufbereitungsverfahren zielen in erster Linie auf die Entstaubung der Luft und ferner auf eine Verhinderung einer Staubexplosion der trockenen Abfallprodukte aus kleinsten Oberflächenpartikeln des Werkstücks ab. Es wurde jedoch beobachtet, dass von dem resultierenden "nassen Abfall" bzw. Schlamm, der bei einer der oben beschriebenen Aufbereitungen anfällt, weiterhin eine Brandgefahr ausgeht. Diese Selbstentzündungsneigung kann gemäß einem Aspekt der vorliegenden Offenbarung durch Hinzufügung eines Additivs minimiert werden. Der potentiellen Brandgefahr kann derzeit anderweitig nicht wirksam entgegengewirkt werden.

Die potentielle Gefahr, die von diesem Abfall ausgeht, geht auf das Vorhandensein kleiner und kleinster metallischer Partikel in der übrigen Matrix (beispielsweise aus Flüssigkeiten, insbesondere Wasser, Fette und Öle; Abfallprodukten etc.) zurück, die infolge ihrer großen Oberflächen, gegebenenfalls unter Wärmeentwicklung, mit Luftsauerstoff, Wasser und Feuchtigkeit reagieren. Da diese Reaktion exotherm (d.h. unter Freisetzung von Energie/Wärme) abläuft und ganz allgemein die Reaktionsgeschwindigkeit mit der Temperatur steigt, und zudem Lager von Abfällen oft so angelegt sind, dass ein Wärmestau eintritt (zum Beispiel in größeren Containern), ist mit einem zeitlich beschleunigten Ablauf solcher Reaktionserscheinungen zu rechnen. So entsteht unter solchen Bedingungen regelmäßig Wasserstoff (im äußerst reaktionsfähigen "status nascendi"), der sogar zu spontanen Selbstentzündungen führen kann, gegebenenfalls gemeinsam mit etwaigen parallel ablaufenden exothermen oxidativen Reaktionen der Metalle.

Die Wahrscheinlichkeit der Selbstentzündung des (zunächst nassen) Abfalls, insbesondere solcher der gelagert wird, wird ferner zusätzlich durch das Verdampfen von Wasser gesteigert. Beispielsweise werden die Abfälle in offenen Gefäßen gesammelt, wobei es zur Verdunstung von Wasser kommt. Hierdurch wird der Abfall im Lauf der Zeit immer trockener und die Konzentration an brennbaren Mitteln nimmt innerhalb dieser Abfälle zu. Ein nasser Abfall hat den Vorteil der inhärenten Kühlung, wobei die Temperatur des Abfalls beispielsweise unterhalb von 100°C gehalten werden kann. Ferner kann das Wasser mit der obersten Schicht der Metalle reagieren unter Ausbildung einer Schutzschicht. Eine Verdunstung von Wasser ist somit grundsätzlich nachteilig, da die Selbstentzündungsneigung abhängig ist vom Trocknungsgrad des Abfalls. Die Verdampfung ist abhängig von der Umgebungstemperatur, so dass sich gerade bei warmer Witterung derartige Abfälle schnell entzünden können. Dies kann beispielsweise in Lagerhallen oder beim Transport in offenen Containern passieren, ggfs. können sogar Lastwagen (LKW) in Brand geraten, wobei große Schäden drohen.

Die Wahrscheinlichkeit für Selbstentzündung steigt üblicherweise mit der Größe der Oberfläche der metallischen Partikel, dem Trocknungsgrad des Abfalls und mit der damit einhergehenden, abnehmenden Restfeuchte. Während kompakte, massive Metallstücke außer bei Einwirkungen durch Säuren, Laugen oder heißem Wasser oder bei Erhitzen über die Schmelztemperatur (Involvierung in ein Brandgeschehen) kaum gefährlich reagieren, weisen kleinteilige Metallpartikel wie Pulver, Metallkörner und feine Späne aufgrund der wesentlich größeren Oberfläche abweichende Eigenschaften auf.

Die Selbstentzündungsneigung der entstehenden Abfallprodukte erhöht den Aufwand für das Oberflächenbearbeitungsverfahren als solches. Zusätzlich werden die Lagerung, das Transportieren sowie das Entsorgen der Abfallprodukte erschwert.

Allgemein und im Rahmen dieser Offenbarung wird unter Selbstentzündung der Vorgang verstanden, bei dem sich ein System durch das eigene Energieaufkommen so weit erwärmt (bis zu einer Zündtemperatur), dass vorhandene brennbare Stoffe entzündet werden. Dies kann die Entzündung eines brennfähigen Stoffes ohne Einwirkung einer Zündquelle umfassen, d.h. ohne Fremdzündung durch Funken oder Flammen. Als Zündtemperatur wird diejenige Temperatur bezeichnet, bei der Stoffe an heißen Körpern Selbstentzündung zeigen (Entzündungstemperatur).

Die Zündtemperatur sowie die Fähigkeit zur Selbstentzündung sind vom Wasserrestgehalt, Druck, der Sauerstoffkonzentration und von katalytischen Einflüssen abhängig. Die Zündtemperatur von Stoffen oder Stoffgemischen kann erreicht werden, wenn in diesen exotherme Reaktionen (mit Wärmefreisetzung) ablaufen, deren Reaktionswärme nicht nach außen abgeführt werden kann. Die Selbstentzündungsprozesse gliedern sich in das Stadium der Selbsterwärmung und der Selbstentzündung. Voraussetzung für die Temperaturerhöhung ist eine chemisch reagierende Substanz bzw. ein biologisch bedingter Ablauf, durch den die nötige Energie bereitgestellt wird. Die erforderliche Wärmemenge wird durch eine spontane chemische Reaktion (zum Beispiel Autooxidation) oder physikalische Vorgänge (Reibung, Schlag, elektrostatische Aufladung) in den oder an der Oberfläche der Brandstoffe selbst erzeugt. Die meisten Selbsterwärmungs- und Entzündungsprozesse sind an eine Anlaufzeit, verbunden mit einem Wärmestau, sowie die richtige Menge vorhandenen Luftsauerstoffs gebunden. Auch starke Sauerstoff-Adsorption an feinteiligen Oberflächen (Staub) kann Selbstentzündung hervorrufen.

Gemäß einem beispielhaften Ausführungsbeispiel enthält das Salz ein Carbonat und/oder ein Halogenanion. Bevorzugt handelt es sich bei dem Halogenanion um ein Fluorid. Gemäß beispielhaften Ausführungsformen besteht das Additiv aus dem Salz. Gemäß alternativen Ausführungsformen bildet das Salz einen Bestandteil des Additivs.

Gemäß einer beispielhaften Ausgestaltung kann die zu bearbeitende Oberfläche des Werkstücks bevorzugt aus Metallen bzw. Metalllegierungen, insbesondere aus Leichtmetallen und/oder aus Leichtmetall-Legierungen bestehen oder insbesondere aus Buntmetallen und/oder Buntmetalllegierungen. Die Oberfläche des Werkstücks kann gemäß dieser Offenbarung in Form einer Beschichtung vorliegen, so dass der Grundkörper des Werkstücks aus einem anderen Material bestehen kann.

In dieser Offenbarung werden die Begriffe "Leichtmetall", "Leichtmetalllegierung", "Buntmetall", "Buntmetalllegierung", "Metalllegierung" und "Metall" verwendet.

Als Leichtmetalle werden allgemein Metalle und Legierungen bezeichnet, deren Dichte unter 5 g/cm² liegt. Grundsätzlich können vor allem Aluminium, Magnesium, Titan sowie in geringerem Umfang Beryllium und Lithium sowie weitere Elemente als Legierungselemente in geringer Konzentration eingesetzt werden. In den letzten Jahren hat der Einsatz von Leichtmetallen zunehmende Bedeutung erlangt. Dafür ausschlaggebend sind die Materialeigenschaften, wie die geringe Dichte, damit verbunden das geringe Trägheitsmoment und das geringe Gewicht der Produkte. Außerdem sind die einfache Formbarkeit von Werkstücken (etwa mittels Guss oder Spritzguss) und deren relative einfache Bearbeitbarkeit von Vorteil.

Als Buntmetalle zählen beispielsweise folgende Metalle: Cadmium (Cd), Cobalt (Co), Kupfer (Cu), Nickel (Ni), Blei (Pb), Zinn (Sn) und Zink (Zn). Diese Metalle zeichnen sich durch ihre Farbigkeit aus, die sich sowohl in ihrer Reinform als auch in entsprechenden Legierungen vorkommt. Buntmetalle besitzen eine größere Dichte (über 5 g/cm²) als die Leichtmetalle und zählen daher zu den Schwermetallen. Legierungen von Buntmetallen sind beispielsweise Messing (Kupfer und Zink) oder Bronze (Kupfer und Zinn). Weitere bevorzugte Legierungen sind solche von Buntmetallen und anderen Buntmetallen oder Aluminium, Titan, Magnesium etc.

In Versuchen konnte nachgewiesen werden, dass in der Oxidation von Metallpartikeln aus dem Materialabtrag des Werkstücks ein Hauptgrund für die Selbstentzündung des Abfallproduktes bzw. des Abfalls zu sehen ist. Dies trifft auf sämtliche der oben genannten Metalle zu und kann grundsätzlich weitere Metalle betreffen. Die Metallpartikel können sogenannte Hotspots bilden. Es kommt hierdurch zu einer Selbsterwärmung des Abfalls und schließlich zur Selbstentzündung. Diese Erkenntnis war vor allem deshalb überraschend, da man bisher davon ausgegangen war, dass der feinkörnige, partikelhaltige Materialabtrag allein schon durch nasse Aufbereitung unreaktiv gemacht werden kann.

Sofern der Abfall insbesondere Fette oder Öle aufweist, die beispielsweise in Poliermitteln enthalten sind, ist man davon ausgegangen, dass gerade die ungesättigten Verbindungen der Öle/Fette des abrasiv wirksamen Mittel, wenn sie auf einer großen Oberfläche verteilt sind, durch direkte Oxidation mit Luftsauerstoff genügend Wärme erzeugen, um unter entsprechenden Bedingungen ein Schwelbrand und schließlich ein offenes Feuer auszulösen. Mit anderen Worten ist man bisher davon ausgegangen, dass die Selbstentzündungsneigung durch die Hydrierung der Doppelbindungen der Fette entsteht und durch die dabei entstehende Wärme die Metallpartikel entzünden. Dies ist jedoch nicht der Hauptgrund für die Selbstentzündung.

Allgemein sind unter Carbonaten Salze und Ester der Kohlensäure (H₂CO₃) zu verstehen. Im Rahmen dieser Offenbarung wird unter Carbonaten insbesondere das Salz der Kohlensäure verstanden. Von der zweiprotonigen (zweibasigen) Säure leiten sich zwei Reihen von Salzen ab, nämlich die Hydrogencarbonate, die auch primäre Carbonate genannt werden, mit der allgemeinen Formel M⁺HCO₃ und die sekundären Carbonate, mit der allgemeinen Formel M+²CO₃. Die sekundären Carbonate basieren auf dem zweifach negativ geladenen Carbonat-Ion CO₃²⁻. Diese Carbonate sind im Rahmen dieser Offenbarung ein bevorzugter Bestandteil des Additivs.

Als Halogenidanionen bzw. Halogenide werden allgemein und auch im Rahmen dieser Offenbarung die einfach negativ geladenen Ionen der Elementen der siebten Hauptgruppe (genauer der 17. Gruppe) des Periodensystems also der Halogene (F⁻, Cl⁻, Br⁻, I⁻, At⁻) bezeichnet. Die Begriffe Halogenide und Halogenanion werden in dieser Offenbarung synonym verwendet. Halogenide bilden Verbindungen, die sich aufgrund ihrer chemischen Bindung unterscheiden.

Die erste Gruppe bilden die ionischen Verbindungen (Salze), die infolge der großen Elektronegativitätsdifferenz zwischen den beteiligten Elementen aus Anionen und Kationen bestehen und durch elektrostatische Wechselwirkungen zusammengehalten werden. Daneben können die Halogenide kovalente Verbindungen eingehen, bei diesen Verbindungen ist der Elektonegativitätsunterschied nicht so groß wie bei den zuvor genannten ionischen Verbindungen. Die Bindungen weisen dennoch Ladungspolaritäten auf. Eine weitere Gruppe der Halogenide bilden die Verbindungen, in denen die Halogenid-lonen als Komplex gebunden vorliegen. Mit anderen Worden liegen die Halogenidanionen als Liganden vor. Im Rahmen dieser Offenbarung können die Halogenidanionen in jeglicher Form im Additiv bzw. schlussendlich im Abfall gebunden vorliegen.

Durch das Hinzufügen eines Additivs, welches ein Salz aus einem Carbonat und/oder einem Halogenanion enthält, werden die Metalle in unreaktiver Form gebunden, beispielsweise als Komplex oder Salz. Sich ergebende Verbindungen können beispielsweise Folgende sein: Magnesiumcarbonat (MgCOs), Aluminiumcarbonat (Al₂(CO₃)₃), Zinkcarbonat (ZnCOs), Magnesiumfluorid (MgF₂), Aluminiumfluorid (AlF₃), Zinkfluorid (ZnF₂) oder als Titanfluorid (TiF₄). Mit anderen Worten es kommt zu einer chemischen Umsetzung zwischen den Metallen und den Carbonaten und/oder Halogeniden, so dass die brennbaren Metalle nicht mehr als Reaktionspartner zu Verfügung stehen.

Sofern in dieser Offenbarung der Begriff "unreaktive Form" verwendet wird, so ist hierunter beispielsweise zu verstehen, dass ein entsprechender Stoff nunmehr nicht mehr als entzündbar bzw. als selbstentzündungsfähig eingestuft wird. Gemäß dieser Offenbarung sind unreaktive Stoffe insbesondere solche, die nicht in die GHS-Kennzeichnungsklasse GHS02 eingeteilt werden. Diese Klasse betrifft hochentzündliche, leichtenzündliche und entzündliche Stoffe.

Das Hinzufügen des Additivs kann grundsätzlich in zumindest einem Teilschritt des Oberflächenbearbeitungsverfahrens erfolgen, wobei vorausgesetzt wird, dass das Additiv schlussendlich in den Abfallprodukten bzw. im Abfall vorliegt. Beispielsweise kann das Hinzufügen des Additivs bei mehreren der Schritte erfolgen, insbesondere wenn Entstehung von besonders leichtentzündlichen Stäuben droht. So kann beispielsweise das Bearbeitungswerkzeug neben dem abrasiv wirksamen Mittel das Additiv aufweisen. Alternativ oder zusätzlich kann das Hinzufügen des Additivs im Teilschritt der Aufbereitung der Abfallprodukte erfolgen.

Gemäß einer weiteren Ausgestaltung des Verfahrens besteht die zu bearbeitende Oberfläche des Werkstücks aus Magnesium, Magnesiumlegierungen, Aluminium, Aluminiumlegierungen, Titan, Titanlegierungen, Zink oder Zinklegierungen.

Metallisches Magnesium, Magnesiumlegierungen, Aluminium und Aluminiumlegierungen haben bei der Erzeugung von Gebrauchsgütern inzwischen eine feste Stellung eingenommen, sei es als Werkstoff im Maschinen-, Auto- und Flugzeugbau oder bei vielfältigen Gegenständen des täglichen Lebens, insbesondere auch in der Baubeschlag Industrie. Gerade in der Leichtbautechnik sind diese Metalle von besonderem Interesse. Sie bilden leichtgewichtige Materialien, beispielsweise für Kraftfahrzeuganwendungen. Die Verwendung dieser Metalle kann die Wirtschaftlichkeit eines Fahrzeugs signifikant verbessern. Auch für Zink bzw. seine Legierungen finden sich diverse Anwendungen. Bevorzugte Legierungen sind hierbei beispielsweise Messinglegierungen. Messing besitzt den Vorteil, dass es sich gut verarbeiten und verformen lässt. Aus Legierungen von Zink mit Aluminium und Magnesium werden unter anderem Fahrzeugteile hergestellt.

Die Hauptmenge des produzierten Magnesiums wird für Legierungen mit Aluminium verwendet. Es werden jedoch auch Bauteile produziert, die aus Legierungen bestehen, deren Hauptbestandteil Magnesium ist. Man unterscheidet zwischen Aluminium-Legierungen mit bis zu 11% Mg und den eigentlichen, extrem leichten Legierungen mit Magnesium als Hauptbestandteil.

Nachteilig ist jedoch, dass sich diese Metalle (Mg, AI, Ti und Zn) gerade in Form von Kleinstpartikeln, wie beispielsweise Metallstäube oder Metallspäne, leicht entzünden können. Dies geschieht auch nach vorheriger Aufbereitung durch ein Lösungsmittel, beispielsweise Wasser.

Chemisch gesehen besitzen Aluminium, Magnesium, Titan, Zink sowie weitere Metalle eine enorme Affinität zum Sauerstoff. Die zeigt sich zum Beispiel in einem dünnen Film von Oxiden, der fast augenblicklich entsteht, wenn kleinste Metallpartikel der Atmosphäre ausgesetzt werden. Der Oxidfilm ist inert und schützt das darunter liegende Metall vor weiteren Angriffen. Wenn ein Metallpulverteilchen bis zum Zündpunkt erhitzt wird, ist die Teilchenmasse so gering, dass das ganze Teilchen fast augenblicklich oxidieren kann. So wird ein Großteil dieser Teilchen "verbrennen".

Gemäß einer beispielhaften Ausgestaltung des Verfahrens ist das Salz ausgewählt aus der Gruppe, die aus Natriumcarbonat, Kaliumcarbonat und Natriumfluorid besteht. Auch Kombinationen davon sind grundsätzlich denkbar. Diese Salze bieten den Vorteil, dass sie besonders kostengünstig und im Handel leicht verfügbar sind. Ferner sind die Salze aufgrund ihres festen Aggregatzustandes (bei Raumtemperatur) einfach in der Handhabung. Natriumcarbonat und Kaliumcarbonat gehören zudem zu den ungiftigen Salzen, so dass keine weitere Gefahr von diesen Salzen auszugehen ist.

Die Aufbereitung der Abfallprodukte wird durch Benetzen durchgeführt. Wie vorstehend bereits erläutert, werden die entstehenden Abfallprodukte bevorzugt nasschemisch abgefangen. Dabei wird die Gefährdung durch Brände oder Explosionen zunächst auf ein geringeres Maß herabgesetzt. Durch die Hinzufügung des Additivs in einen Teilschritt des Verfahrens werden die Selbstentzündungsneigung und die damit verbundene Brandgefahr noch einmal herabgesetzt, vorzugswiese auf ein im Rahmen der spezifischen Umstände tolerierbares Niveau.

Das Benetzen der Abfallprodukte kann im Sinne dieser Offenbarung mit jeder geeigneten Flüssigkeit erfolgen; beispielsweise können als Waschflüssigkeit reine Lösungsmittel wie Wasser, aber auch Suspensionen wie etwa Kalkmilch, eingesetzt werden. Einem Fachmann wird dabei klar sein, welche Menge an Flüssigkeit er verwenden muss. Zu beachtende Parameter hierbei sind die Vermeidung von Bränden, der Kostenaufwand für die Entsorgung des entstehenden Abfalls, die Art der Flüssigkeit etc.

Gemäß einer weiteren Ausgestaltung des Verfahrens wird die Aufbereitung der Abfallprodukte in einem Nassabscheider durchgeführt, umfassend die Entstehung von nassem Abfall. Diese Ausgestaltung unterscheidet sich von der vorgenannten Ausgestaltung lediglich in der Benützung eines Nassabscheiders. Die verwendeten Flüssigkeiten können analog verwendet werden.

Allgemein und im Rahmen dieser Offenbarung wird unter einem Nassabscheider oder sogenanntem Absorber ein verfahrenstechnischer Apparat verstanden, in dem ein Gasstrom mit einem Flüssigkeitsstrom in Kontakt gebracht wird. Die Wirkungsweise von Nassabscheidern beruht auf der Überführung von Partikeln aus einem strömenden partikelbeladenen Gas in eine Flüssigkeit. Hierzu sind entsprechende Phasengrenzflächen zwischen Gas und Flüssigkeit zu bilden und eine Relativbewegung zwischen diesen beiden Phasen zu erzeugen. Eine Methode, Phasengrenzflächen bei möglichst intensiver Durchmischung von Gas und Flüssigkeit zu erzielen, ist die Dispergierung einer Phase in die andere. Das heißt zum Beispiel, dass Blasenschwärme in einer Flüssigkeit oder Tropfenkollektive in Gas erzeugt werden, bzw. Systeme, in denen die Flüssigkeit als mehr oder weniger zerteilter Strahl vorliegt. Eine weitere prinzipielle Möglichkeit, Gas und Flüssigkeit miteinander in Kontakt zu bringen, ist die Umströmung flüssigkeitsbenetzter Körper. Die große Zahl an Varianten, die bei Nassabscheider-Anlagen anzutreffen sind, beruht auf der Vielfalt der Möglichkeiten, Phasengrenzflächen zu bilden und die Relativbewegung zwischen Gas und Flüssigkeit zu erzeugen.

Bei den übergehenden Bestandteilen des Gasstromes kann es sich um feste, flüssige oder gasförmige Stoffe handeln, insbesondere der Abfallprodukte, die bei der Oberflächenbearbeitung anfallen.

Gemäß einer weiteren Ausgestaltung des Verfahrens erfolgt die Hinzufügung des Additivs innerhalb des Nassabscheiders und/oder in den nassen Abfall. Diese Ausgestaltung bietet den Vorteil, dass das Additiv vollständig im nassen Abfall vorliegt und so die Selbstentzündungsneigung dessen herabsetzt. Die Carbonate und/oder Halogenidanionen können hierbei direkt mit den entzündlichen Metallen in dem flüssigen, insbesondere wässrigen Abfall reagieren zu unreaktiven Verbindungen.

Das Additiv kann in fester Form oder in verdünnter Form, etwa gelöst in einem Lösungsmittel, in einem Teilschritt des Verfahrens hinzugegeben werden. Gemäß einer beispielhaften Ausgestaltung kann das Additiv in einem Lösungsmittel, beispielsweise Wasser, gelöst vorliegen und als Flüssigkeitsstrom im Nassabscheider verwendet werden. Hierdurch lässt sich das Hinzufügen des Additivs automatisch steuern. Ferner kann das Additiv manuell in den entstehenden nassen Abfall gegeben werden oder alternativ über eine Leitung in den nassen Abfall geleitet werden. Dazu kann das Additiv beispielsweise lediglich aus dem Salz aus Carbonat und/oder Halogenidanion bestehen.

Gemäß einer weiteren Ausgestaltung des Verfahrens umfasst die Aufbereitung der Abfallprodukte eine Brikettierung, wobei die Hinzufügung des Additivs vor dem Brikettieren erfolgt. Auch bei dieser Art der Nachbehandlung kann das Additiv zu Verringerung einer Selbstentzündungsneigung beitragen. Dies kann einen Zeitraum vor der Brikettierung betreffen, in dem die Abfallprodukte zumindest teilweise staubförmig vorliegen.

Gemäß einer weiteren Ausgestaltung des Verfahrens ist das Bearbeitungswerkzeug als Schleifscheibe, Bürstscheibe, Polierscheibe, Zerspanwerkzeug oder als Strahlanlage ausgeführt. Wie bereits ausgeführt stellt eine bevorzugte Oberflächenbearbeitung im Sinne dieser Offenbarung das industrielle Schleifen, Zerspanen, Bürsten, Strahlen bzw. Polieren dar. Hierfür werden als Bearbeitungswerkzeug Polierscheiben, Fräswerkzeuge, Drehmeißel, Bürstscheiben, Strahlanlagen oder Schleifscheiben eingesetzt. Ferner können andere Zerpanwerkzeuge als Bearbeitungswerkzeug eingesetzt werden.

Gemäß einer weiteren Ausgestaltung des Verfahrens ist das Additiv in bzw. auf die Schleifscheibe, Bürstscheibe, dem Zerspanwerkzeug oder die Polierscheibe eingebracht und/oder aufgebracht. Im Rahmen dieser Offenbarung kann dies beispielsweise durch Tränkung in dem Additiv erfolgen. Hierdurch wird insbesondere der Trägerwerkstoff mit dem Additiv durchtränkt. Eine weitere Möglichkeit bietet die Beschichtung des Additivs auf die Schleif-, Bürst- bzw. Polierscheibe oder dem Zerspannwerkzeug. Auch hier ist der Trägerwerkstoff der Träger des Additivs, jedoch befindet sich das Additiv bei dieser Ausgestaltung vermehrt auf der äußersten Schicht des Trägerwerkstoffes des Bearbeitungswerkzeuges. Hierzu liegt das Additiv als Lösung vor, so dass neben dem Salz weitere Zusatzstoffe und Flüssigkeiten vorliegen. Handelt es sich bei der Oberflächenbearbeitung um eine Strahlbehandlung, wobei Strahlgut mittels Druckluft auf die zu bearbeitende Oberfläche beschleunigt wird, kann das Additiv auch mit dem Strahlgut vermengt sein.

In einer weiteren bevorzugten Ausgestaltung kann das Additiv auch bereits während der Fertigung des Trägerwerkstoffes in das Material eingearbeitet werden. Dies ist besonders bevorzugt, wenn der Trägerwerkstoff aus künstlichen Werkstoffen, wie etwa Kunstfasern, hergestellt ist.

Gemäß einer weiteren Ausgestaltung des Verfahrens ist das abrasiv wirksame Mittel ein Poliermittel, Bürstmittel, Strahlgut, ein Schneidstoff oder Schleifmittel. Poliermittel, Bürstmittel oder Schleifmittel bestehen üblicherweise aus Fetten, Ölen und dem eigentlichen abrasiv wirksamen Mittel, etwa den Schleifkörnern. Schleifkörner aber auch das Strahlgut können beispielsweise aus Tonerde, Korund, Aluminiumoxiden, Aluminiumhydroxiden, Aluminiumsilikaten, Magnesium-Aluminium-Silikaten, Chromtrioxiden, Calciumcarbonaten, Ceroxiden, Quarzen, Eisenoxiden, Kieselerden oder ähnlichem bestehen. Je nach beabsichtigter Anwendung können die Schleifkörner etwa eine Größe von 0,1 µm (Mikrometer) bis hin zu etwa 200 µm aufweisen. Die Schleifkörner können etwa einen Massenanteil von 20% bis 70% des abrasiv wirksamen Mittels bilden. Schneidstoffe umfassen üblicherweise Hartmetall, Werkzeugstahl, Schneidkeramiken, Bornitride oder Diamant.

Gemäß einer weiteren Ausgestaltung des Verfahrens ist das Poliermittel als Festpaste oder als Emulsion ausgestaltet. Emulsionen zur Oberflächenbearbeitung bestehen üblicherweise aus einem Gemisch von Wasser, Fetten, Ölen sowie Schleifkorn (üblicherweise auf Basis keramischer Werkstoffe), das idealerweise in der Emulsion gleichverteilt vorliegt. Die Emulsionen können durch Sprühdüsen ausgebracht und auf Polierwerkzeug aufgesprüht werden. Festpasten zur Oberflächenbearbeitung stellen eine zweite wesentliche Gruppe von Schleifmittel oder Poliermittel dar. Es handelt sich bei den Festpasten üblicherweise um Gemische aus Lipiden (umfassend etwa Fette Öle und Wachse), diesen beigemengten Zusatzstoffe sowie einem entsprechenden Anteil an Schleifkorn, das dem Trägerwerkstoff idealerweise gleichverteilt beigemischt ist.

Gemäß einer weiteren Ausgestaltung des Verfahrens wird das Additiv dem Poliermittel hinzugefügt. Auch auf diese Weise wird sichergestellt, dass die Selbstentzündungsneigung des entstehenden Abfallproduktes herabgesetzt wird. Die wirksamen Carbonate und/oder Halogenanionen gelangen in einer beispielhaften Ausgestaltung in Form von verbrauchtem Poliermittel als Abfallprodukt in den eigentlichen Abfall zusammen mit den anderen Abfallprodukten. Im Abfall können die Ionen mit den Metallen zu unreaktiven Verbindungen reagieren, so dass die Selbstentzündungsneigung auch auf diese Weise herabgesetzt wird. Die Wirkung der Herabsetzung der Selbstentzündungsneigung durch verwendete Poliermittel konnte anhand von Versuchen nachgewiesen werden.

Diese beispielhafte Ausgestaltung ist vorteilhaft, da die Oberflächenbearbeitung somit automatisiert ablaufen kann, ohne dass zusätzliche Schritte des Hinzufügens des Additivs anfallen, beispielsweise in die Abfallprodukte bzw. in den Abfall. Das Additiv ist bereits im abrasiv wirksamen Mittel enthalten.

Gleichwohl kann das Additiv auch auf andere Weise beigemengt werden, etwa gemäß den oben beschriebenen beispielhaften Ausführungsformen.

Gemäß einer weiteren Ausgestaltung des Verfahrens liegt das Salz zu weniger als 10 Gew.%, bevorzugt weniger als 5 Gew.%, besonders bevorzugt weniger als 2,5 Gew.%, jedoch größer als 0,01 Gew.% in dem abrasiv wirksamen Mittel vor. Es konnte anhand von Versuchen gezeigt werden, dass bereits geringe Mengen an Salz ausreichen können, um die Selbstentzündungsneigung des Abfalls herabzusetzen. Ferner beeinträchtigen diese Mengen die Wirksamkeit des abrasiv wirksamen Mittels nicht oder nur unwesentlich. So können identische oder zumindest annähernd gleiche Oberflächenbearbeitungsergebnisse erzielt werden, wie sie mit abrasiv wirksamen Mitteln ohne die entsprechenden Salze erzielt werden können.

Die Aufgabe der Erfindung wird ferner durch die Verwendung eines Additivs gelöst, welches ein Salz aus einem Carbonat und/oder einem Halogenanion, bevorzugt ein Fluorid, enthält, zur Herabsetzung einer Selbstentzündungsneigung von nassen Abfallprodukten.

Auch auf diese Weise wird die Aufgabe der Erfindung vollständig gelöst.

Wie bereits vorstehend ausgeführt, können sich Abfallprodukte, die brennbare Stoffe, insbesondere Metallstäube, aufweisen, selbst entzünden und Brände sowie gegebenenfalls sogar Explosionen hervorrufen. Die Lösung, die Metalle in unreaktive Verbindungen zu überführen, lässt sich gemäß dieser beispielhaften Ausgestaltung auch auf weitere Abfallprodukte analog ausweiten. Abfallprodukte können hierbei beispielsweise solche sein, die bei der Verarbeitung von Metallen anfallen. Dies sind nasse Abfälle, bzw. solche Abfälle, die ein flüssiges Medium besitzen, damit die chemische Reaktion hin zur unreaktiven Verbindung ablaufen kann.

Gemäß einer weiteren beispielhaften Ausgestaltung der Verwendung handelt es sich bei den Abfallprodukten um Polierabfälle, Bürstabfälle, Strahlmittelabfälle, Zerspanabfälle oder Schleifabfälle, allgemein um Abfälle aus der Oberflächenbearbeitung. Die Abfälle enthalten üblicherweise Reste eines Poliermittels, Bürstmittels, Strahlguts, Schneidstoffs oder Schleifmittels, sowie einen Abtrag des bearbeiteten Werkstücks, insbesondere Metallspäne oder Metallstäube.

Gemäß einem beispielhaften Ausführungsbeispiel enthält das Salz ein Carbonat und/oder ein Halogenanion. Bevorzugt handelt es sich bei dem Halogenanion um ein Fluorid. Gemäß weiteren beispielhaften Ausführungsformen ist das Salz ausgewählt aus der Gruppe, die aus Natriumcarbonat, Kaliumcarbonat, Natriumfluorid, und Kombinationen davon besteht.

Gemäß einer weiteren Ausgestaltung der Verwendung fallen die Abfallprodukte bei zumindest einem Teilschritt des offenbarten Verfahrens an.

Ferner wird hierin ein Mittel zur Oberflächenbearbeitung eines Werkstücks offenbart, wobei das Oberflächenbearbeitungsmittel ein selbstentzündungshemmendes Additiv enthält, und wobei das selbstentzündungshemmende Additiv ein Salz aus einem Carbonat und/oder einem Halogenanion, bevorzugt ein Fluorid, ist. Insbesondere kann es sich um ein Poliermittel, Bürstmittel, Strahlgut, Schneidstoff oder Schleifmittel handeln.

Auch auf diese Weise wird die Aufgabe der Erfindung vollständig gelöst.

Bei dem Oberflächenbearbeitungsmittel kann es sich beispielsweise um Feststoffe, eine Paste (Festpaste) oder eine Emulsion handeln. Gemäß einer beispielhaften Ausgestaltung enthält das Oberflächenbearbeitungsmittel ferner Schleifkörner, insbesondere keramische Schleifkörner, und Lipide, wobei die Lipide aus der Gruppe ausgewählt sind, die aus Fetten, Ölen und Wachsen besteht. Das Oberflächenbearbeitungsmittel kann auch Wasser enthalten. Weitere Bestandteile sind denkbar und dem Fachmann geläufig, wie etwa Zuschlagstoffe.

Das Oberflächenbearbeitungsmittel kann zur Verwendung in dem offenbarten Verfahren zur Herabsetzung einer Selbstentzündungsneigung des Abfallprodukts eingesetzt werden.

Weitere Merkmale, Eigenschaften und Vorteile der Erfindung ergeben sich aus der nachfolgenden Beschreibung bevorzugter Ausführungsbeispiele unter Bezugnahme auf die Zeichnungen. Diese Ausführungsbeispiele sind rein illustrativ und schränken den Gegenstand der Erfindung nicht ein.

Es wird Bezug genommen auf die beigefügten Figuren, in denen Folgendes dargestellt ist.
- Fig. 1: veranschaulicht anhand eines Blockdiagramms eine beispielhafte Ausführungsform eines Verfahrens zur Oberflächenbearbeitung von Werkstücken;
- Fig. 2: zeigt anhand eines Schaubildes die Ergebnisse einer beispielhaften kalorimetrischen Messung (ARC-Messung) mit potentiell geeigneten Additiven;
- Fig. 3: zeigt anhand eines Schaubildes die Ergebnisse einer weiteren ARC-Messung mit weiteren Variationen betreffend das Additiv;
- Fig. 4: zeigt anhand eines Schaubildes weitere Ergebnisse einer weiteren ARC-Messung mit weiteren Variationen betreffend das Additiv;
- Fig. 5: zeigt anhand eines Schaubildes die Ergebnisse einer weiteren ARC-Messung mit weiteren Variationen betreffend das Additiv; und
- Fig. 6: zeigt anhand eines Schaubildes die Ergebnisse einer weiteren ARC-Messung mit weiteren Variationen betreffend das Additiv.

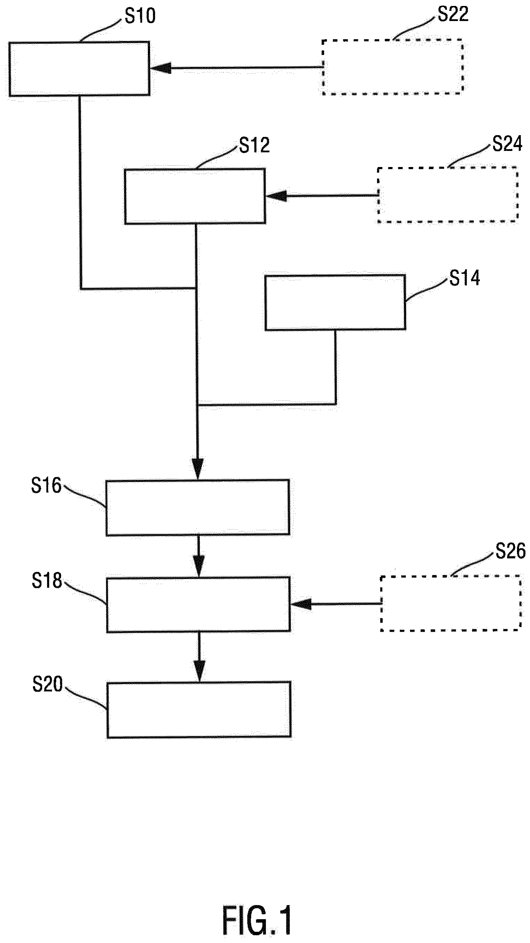

Fig. 1 veranschaulicht anhand eines Blockdiagramms eine beispielhafte Ausführungsform eines Verfahrens zur Oberflächenbearbeitung von Werkstücken. Insbesondere kann das Verfahren eine Material abtragende und/oder Material einebnende Schleifbearbeitung, Bürstbearbeitung, Strahlbearbeitung, Zerspanbearbeitung oder Polierbearbeitung von metallischen Werkstücken umfassen.

Gemäß einem Schritt S10 umfasst das Verfahren die Bereitstellung eines Bearbeitungswerkzeuges, insbesondere einer Schleifscheibe, Bürstscheibe, Strahlanlage, Zerspanwerkzeug oder Polierscheibe. Das Bearbeitungswerkzeug ist beispielhaft scheibenartig gestaltet und an einer Spindel aufgenommen, die mit einem Antrieb gekoppelt ist. Das Bearbeitungswerkzeug ist dazu ausgebildet ein Oberflächenbearbeitungsmittel aufzunehmen. Hierzu kann das Bearbeitungswerkzeug zumindest bedingt saugfähig und/oder porös gestaltet sein. Das Bearbeitungswerkzeug kann beispielsweise Fasern, Gewebe und/oder schwammartige Materialien enthalten.

Ein weiterer Schritt S12 betrifft die Bereitstellung eines abrasiv wirksamen Mittels zur Oberflächenbearbeitung. Insbesondere kann es sich dabei um ein Schleifmittel, Bürstmittel, Strahlgut, Schneidstoff oder Poliermittel handeln. Das Mittel kann beispielsweise als Feststoff, Festpaste oder Emulsion gestaltet sein. Das Mittel umfasst üblicherweise abrasiv wirksame Bestandteile, etwa Schleifkörner, Schneidstoffe bzw. Strahlgut, die in einen Trägerstoff eingebettet sein können, etwa einen Lipid basierten Trägerstoff. Der Schritt S12 kann ferner ein Auftragen des Mittels auf das im Schritt S10 bereitgestellte Bearbeitungswerkzeug umfassen. Dies kann manuell oder automatisiert erfolgen. Je nach Art des Oberflächenbearbeitungsmittels kann das Auftragen ein Aufspritzen, Aufgießen, Andrücken und ähnliche Vorgänge umfassen.

Ein weiterer Schritt S14 umfasst das Zuführen eines Werkstücks mit einer zu bearbeitenden Oberfläche. Das Werkstück ist zumindest teilweise metallisch und insbesondere aus Leichtmetallen oder Buntmetallen gefertigt, etwa aus Aluminium, Magnesium, Zink, Titan oder aus Aluminium, Magnesium, Titan und/oder Zink enthaltenden Legierungen. Das Zuführen kann ein automatisiertes oder manuelles Zuführen umfassen. Üblicherweise wird das Werkstück auf ein ortsfest angeordnetes aber mit einem Antrieb gekoppeltes Bearbeitungswerkzeug zugeführt. Dies schließt jedoch nicht aus, dass gemäß alternativen beispielhaften Ausführungsformen das Bearbeitungswerkzeug auf das Werkstück zugeführt wird. Allgemein kann der Schritt S14 eine Relativbewegung zwischen dem Werkstück und dem Bearbeitungswerkzeug umfassen.

Neben der Werkstück geführten Bearbeitung ist auch die Werkzeug geführte Bearbeitung vorstellbar. Hierbei wird das Werkstück in einer entsprechenden Halterung befestigt und dann durch einen mehrdimensional schwenkbaren Kopf des Werkzeugs bearbeitet; somit ist das "Zuführen" relativ zu verstehen. Mit anderen Worten kann es sich hierbei um eine Werkzeug geführte aber auch um eine Werkstück geführte Bearbeitung handeln

Es schließt sich ein Schritt S16 an, der die eigentliche Oberflächenbearbeitung des Werkstücks umfasst. Dabei wird Material vom Werkstück abgetragen, insbesondere Späne oder sonstige kleine Partikel, die Staub bilden können. Ferner entsteht bei der Bearbeitung regelmäßig Abrieb des Bearbeitungswerkzeugs, beispielsweise in Form von Faserresten, insbesondere aus Baumwollfetzen bzw. Stäuben. Daneben entsteht weiterer Abfall, der aus das Oberflächenbearbeitungsmittel zurückzuführen ist. Dies kann einerseits einen Teil des Mittels betreffen, der gar nicht an der eigentlichen Bearbeitung beteiligt war, sondern vom Bearbeitungswerkzeug weggeschleudert wurde. Ferner kann es sich um Teilmengen des Oberflächenbearbeitungsmittels, die das Werkstück kontaktiert haben. Der Abfall, der bei der Oberflächenbearbeitung entsteht, umfasst folglich diverse Bestandteile.

Abfallprodukte, die bei der Oberflächenbearbeitung entstehen, werden in einem Schritt S18 durch Benetzen aufbereitet. Dies kann ein Entfernen des Abfalls vom Ort der eigentlichen Bearbeitung umfassen. Dies kann beispielsweise über Absauganlagen erfolgen, die kontinuierlich arbeiten. Regelmäßig bleiben jedoch Abfallprodukte am Ort der Bearbeitung übrig, die nicht abgesaugt werden. Diese Abfallprodukte können mechanisch entfernt werden, beispielsweise händisch durch regelmäßige Reinigung. Gemäß zumindest einigen beispielhaften Ausführungsbeispielen umfasst der Schritt S18 eine Behandlung der Abfallprodukte in einem Nassabscheider. Andere Arten der Abfallbehandlung und Abfallaufbereitung sind vorstellbar. Es ist zum Beispiel nicht unüblich, dass eine Zwischenlagerung der Abfallprodukte erfolgt, etwa um hinreichend große Mengen zu sammeln, die dann entsorgt werden können.

Eine beispielhafte Ausführungsform der Aufarbeitung der Abfallprodukte beinhaltet das Brikettieren des Abfalls. Hierbei wird der Abfall verpresst und damit entwässert, wobei dem Abfall gleichzeitig Sauerstoff entzogen wird. Häufig werden in diesem Zusammenhang dem Abfall weitere Bindemittelzusätze hinzugefügt.

Ein weiterer Schritt S20 betrifft die Entsorgung der Abfallprodukte. Dies erfordert Spezialwissen und spezielle Prozesse, so dass dies häufig durch qualifizierte Fremdfirmen erfolgt.

Sowohl während als auch nach der Bearbeitung besteht die grundsätzliche Gefahr einer Selbstentzündung des Abfalls, oder eines Brandes durch Fremdentzündung. Dies kann theoretisch sogar am Ort der Bearbeitung selbst passieren. Jedoch wurde diese Gefahr durch Sicherheitsvorschriften, die etwa die Verwendung von Absauganlangen vorschreiben, deutlich reduziert. Jedoch wurde verschiedentlich beobachtet, dass gesammelte Abfälle zu spontaner Selbstentzündung neigen. Die Gefahr hierfür steigt grundsätzlich mit der Abfallmenge und der Lagerungsdauer und der damit verbundenen Verdunstung von Wasser. Weitere Einflussfaktoren wurden vorstehend bereits erläutert.

Im Rahmen der vorliegenden Offenbarung wird vorgeschlagen, in zumindest einem Teilschritt des Verfahrens ein Additiv beizumengen bzw. hinzuzufügen, welches schlussendlich die Selbstentzündungsneigung der Abfälle herabsetzt.

Die Schritte S22, S24 und S26 betreffen jeweils die Beimengung des Additivs. Die Schritte S22, S24 und S26 stellen verschiedene Möglichkeiten für die Beimengung des Additivs dar. Die Schritte S22, S24 und S26 können umgesetzt werden. Die schließt jedoch nicht aus, dass zur Beimengung des Additivs zwei oder mehr der Schritte S22, S24 und S26 genutzt werden. Wesentlich ist, dass das Additiv zumindest nach der Aufbereitung der Abfallprodukte (Schritt S18) nachweisbar ist.

Das Additiv kann beispielweise gemäß dem Schritt S22 bei der Bereitstellung eines Bearbeitungswerkzeuges (Schritt S10) hinzugefügt werden. So ist es vorstellbar, das Bearbeitungswerkzeug entsprechend zu behandeln. Das Additiv kann etwa über den bei der Bearbeitung entstehenden Scheibenabrieb, der einen Bestandteil des Abfalls bildet, in den resultierenden Abfall eingebracht werden. Das Additiv kann aber auch in dem Lösungsmittel gelöst vorliegen, welches bei der Aufbereitung der Abfallprodukte verwendet wird.

Das Additiv kann ferner beispielweise gemäß dem Schritt S24 im Rahmen der Bereitstellung des Oberflächenbearbeitungsmittels (Schritt S12) hinzugefügt werden. Mit anderen Worten können die genutzten Mittel, etwa Schleifmittel, Bürstmittel, Strahlgut, Schneidstoff oder Poliermittel, mit dem Additiv versehen sein. Das Oberflächenbearbeitungsmittel bildet einen Bestandteil des resultierenden Abfalls, so dass das Additiv dort schlussendlich zur Verfügung stehen kann, um die Reaktivität des Abfalls, insbesondere von Metallspänen und Metallpartikeln im Abfall, herabzusetzen.

Ferner kann das Additiv beispielweise gemäß dem Schritt S26 im Rahmen der Aufbereitung des Abfalls (Schritt S18) in diesen eingebracht werden. Dies kann ein Durchmischen des Abfalls mit dem Additiv umfassen. Das Additiv kann auch bei der Brikettierung der Abfallprodukte beigefügt werden.

### Ausführungsbeispiele

Bei der Oberflächenbearbeitung, insbesondere beim Polieren kommen verschiedene Poliermittel zum Einsatz, abhängig von Werkstoff, gewünschter Oberflächengüte und anderen Faktoren. Die dabei entstehenden Abfälle bestehen beispielsweise aus den Resten des Poliermittels, Baumwollfasern der Polierscheiben, sowie dem erzeugten Metallabrieb des Werkstoffes. Dieser Abfall wird beispielsweise abgesaugt, durch Nassabscheider geführt und anschließend gelagert. Bei der Lagerung treten zuweilen spontane Selbstentzündungen der Abfälle auf, die gegebenenfalls durch Einsatz der Feuerwehr unter Kontrolle gebracht werden müssen.

Es konnte gezeigt werden, dass der Auslöser dieser Selbstentzündung die mit der Oxidation abgeriebener Leichtmetallpartikel verbundene Reaktionswärme ist. In den nachfolgend beschriebenen Versuchen wurde untersucht, welche Additive geeignet sind, diese Reaktion zu unterdrücken oder zumindest abzuschwächen.

Als Messmethode wurde "Accelerating Rate Calorimetry" (ARC) herangezogen. Accelerated Rate Calorimetry (ARC) ist eine thermoanalytische Methode, bei der eine Probe in einem regelbaren Ofen gelagert wird. Dabei wird die Temperatur der Probe gemessen und der Ofen der Probentemperatur nachgefahren, so dass keinerlei Wärmestrom von der Probe in den Ofen oder umgekehrt stattfindet. Somit liegen zumindest angenähert adiabatische Verhältnisse vor.

Auf diese Weise kann die Situation im Inneren einer großen Probe simuliert werden, bei der der Verlust durch Wärmeleitung an die Umgebung nahezu Null ist und die Aufheizung ausschließlich durch die chemischen Reaktionen in der Probe erfolgt. Da die Geschwindigkeit chemischer Reaktionen temperaturabhängig ist, erhöht sich durch die entstehende Reaktionswärme die Reaktionsgeschwindigkeit und damit die Aufheizung im Probeinneren. Es tritt also ein selbstverstärkender Effekt auf, es kommt gegebenenfalls zur beschleunigten Aufheizung.

Während einer Messung wird die Probe zunächst auf eine definierte Starttemperatur gebracht und dort gehalten. Wird innerhalb eines gegebenen Zeitfensters kein Temperaturanstieg registriert, so wird die Ofentemperatur um einen festgelegten Betrag erhöht und anschließend ebenfalls die Probe auf einen Temperaturanstieg hin beobachtet. Dieses Verfahren wird solange durchgeführt, bis die Probe eine Eigenerwärmung aufweist.

Ab diesem Moment regelt der Ofen selbsttätig auf die tatsächliche Probentemperatur nach. Dies wird fortgeführt, bis entweder die Eigenerwärmung zum Erliegen kommt (zum Beispiel durch vollständige Reaktion) oder Druck- oder Temperaturobergrenzen erreicht werden.

Die Messung wird als Selbsterwärmung (Self Heating Rate (SHR) in °C/min) gegen die Temperatur (in °C) aufgetragen. Dabei kann anhand der Kurvenform ermittelt werden, ob es sich um eine beschleunigte Aufheizung handelt und ab welcher Temperatur diese einsetzt.

### 1. Vorarbeiten

In einem ersten Versuch, sollte herausgefunden werden, welche Verbindungen geeignet sind, die Selbstentzündungsneigung von Poliermittelabfall herabzusetzen. Als potentiell geeignete Kandidaten wurden zunächst die Salze Natriumfluorid und Natriumcarbonat gewählt.

Als Rohmaterial wurde realer Poliermittelabfall verwendet, der bei der Oberflächenbearbeitung von aluminiumhaltigen Werkstücken anfiel. Im Rahmen der Oberflächenbehandlung wurden die anfallenden Abfallprodukte ohne vorherige Aufarbeitung gesammelt. Der Abfall wurde also nicht in einem Nassabscheider aufgearbeitet und war somit weitgehend trocken.

Die ersten Versuche umfassten Vorarbeiten gemäß den folgenden Schritten, bevor eine ARC-Messung durchgeführt wurde:
1. Auflösen des entsprechenden Salzes (Menge in % jeweils bezogen auf 10 g Poliermittelabfall) in 200 ml deionisiertem Wasser;
2. Einrühren von 10 g Poliermittelabfall, stehen lassen, erneut aufrühren;
3. Salz einwirken lassen (meist 24 h);
4. Poliermittelabfall abfiltrieren und mit destilliertem Wasser waschen;
5. Trocknung 24 h im Abzug bei Raumtemperatur; und
6. Lagerung bis zur ARC-Messung im Exsikkator unter Molsieb.

Schritt 1 in Verbindung mit Schritt 2 simuliert in diesem Fall eine Aufarbeitung in einem Nassabscheider, der häufig bei der Oberflächenbearbeitung eingesetzt wird. Demgemäß sind die gewonnenen Erkenntnisse auch auf Abfälle anwendbar, die einen Nassabscheider durchlaufen haben.

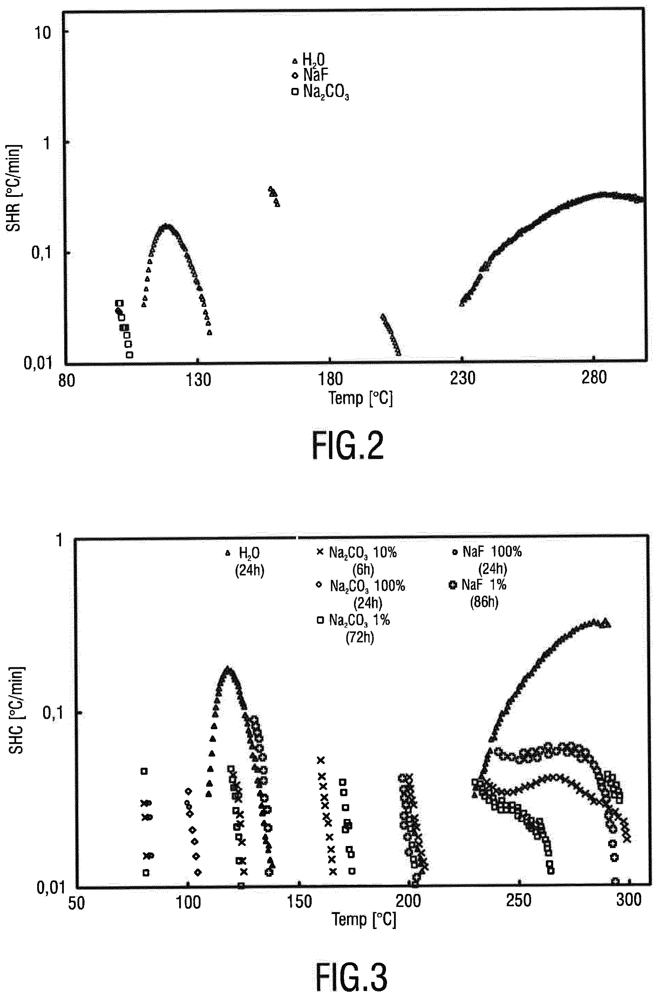

In Fig. 2 werden die Ergebnisse der Versuche dargestellt. Alle Salze (NaF, Na₂CO₃) zeigen, verglichen mit Wasser (dient als Referenz), eine geringere Selbstaufheizung. Im Bereich ab 230°C ist die Selbsterwärmung der Referenz zu sehen. In diesem ersten Versuch konnte gezeigt werden, dass Natriumcarbonat und Natriumfluorid als eingesetzte Additive die Selbstentzündungsneigung des Abfalls herabsetzen können. Eindrucksvoll konnte gezeigt werden, dass in den gewählten Konzentrationsbereichen kaum eine messbare, potentiell kritische Selbsterwärmung der Proben beobachtet werden konnte.

Neben der ARC Messung wurden parallel eine DSC-Messung (Differential Scan Calorimetry) durchgeführt (nicht in den Fig. gezeigt). Diese ergab, dass sämtliche Salze den Energieinhalt (J/g) des Peaks herabsetzen (Referenz ca. 200 °C). Zusätzlich wird die Onset-Temperatur, also die Temperatur, ab der eine Exothermie auftritt erhöht.

Ausgehend von diesen Erkenntnissen wurden weitere Versuche mit Natriumcarbonat und Natriumfluorid durchgeführt. Dabei wurden sowohl verschiedene Additivkonzentrationen als auch unterschiedliche Einwirkzeiten untersucht.

### 2. Variation der Konzentrationen und Einwirkzeiten der Salze

In einem zweiten Versuch wurde die Wirkung unterschiedlicher Konzentrationen und Einwirkzeiten der Salze auf den Abfall untersucht. Die Versuchsdurchführung verlief analog zu der unter Punkt 1 beschriebenen.

Die Ergebnisse dieser ARC-Messung werden in Fig. 3 dargestellt.

Fig. 3 liefert einen Gesamtüberblick über die verschiedenen Selbstaufheizungsprozesse der Proben. Sämtliche mit offenbarungsgemäßen Additiven versetzten Proben zeigen eine geringere Selbstaufheizung als die unbehandelte Probe. Im Bereich ab 230 °C zeigt eine 1 % NaF-Probe bei 86 h Einwirkzeit eine größere Selbstaufheizung als eine 1 % Na₂CO₃-Probe mit 72 h Einwirkzeit. Zusätzlich zeigt die 10% Na₂CO₃-Probe mit 6 h Einwirkzeit ebenfalls eine höhere Selbsterwärmung als die erwähnte 1% Na₂CO₃-Probe mit 72 h. Dies zeigt neben dem Einfluss der Salzkonzentration auch einen Einfluss der Einwirkzeit.

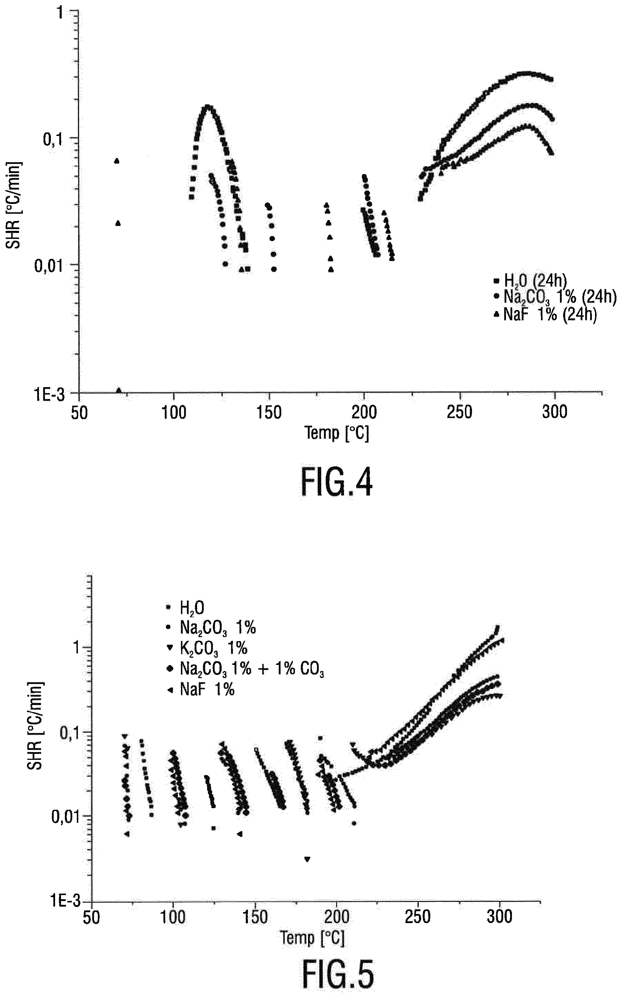

Um diese Einflüsse sauber zu trennen, wurden die NaF- und Na₂CO₃-Proben noch einmal mit identischen Einwirkzeiten von 24 Stunden wiederholt. Diese Ergebnisse werden in Fig. 4 dargestellt. Im Verhältnis zur Referenz werden die Selbsterwärmungen auf 56,5 % (Carbonat) bzw. 39,1 % (Fluorid) reduziert.

### 3. Poliermittel enthaltend ein Salz aus Carbonat/ Halogenanion

Auf Basis der gewonnenen Erkenntnisse aus den vorstehend beschriebenen Versuchen wurde im nächsten Schritt eine modifizierte Polieremulsion mit jeweils den Salzen Natriumfluorid, Natriumcarbonat und Kaliumcarbonat hergestellt. Mit diesen Poliermitteln wurden Polierversuche mit einem Roboter durchgeführt. Die entstandenen Abfälle wurden in einem Nassabscheider aufbereitet, so dass der Polierabfall in nasser Form vorlag. Die Versuche umfassten die nachfolgenden Schritte, bevor eine ARC-Messung durchgeführt wurde:
1. 10 g Polierabfall in 200 ml destilliertem Wasser einrühren, stehen lassen, erneut aufrühren;
2. Lösung 24 h ruhen lassen;
3. Rückstand abfiltrieren und mit destilliertem Wasser waschen;
4. Rückstand 24 h Stunden im Abzug bei Raumtemperatur trocknen; und
5. Lagerung bis zur ARC-Messung im Exsikkator unter Molsieb.

Die Ergebnisse dieser Versuche werden in Fig. 5 gezeigt.

In den Versuchen zeigt sich, dass Natriumfluorid in diesem Setup schlechter wirkt als die verschiedenen Carbonate. Darüber werdend bei der Referenzsowie der Fluorid-Probe die Kurven zum Ende hin mit steigender Temperator steiler, während die Carbonate zum Ende hin eine etwas abflachende Kurve zeigen. Hier konnte folglich die Selbstaufheizung gehemmt werden und möglicherweise sogar bei höheren Temperaturen zum Stillstand kommen.

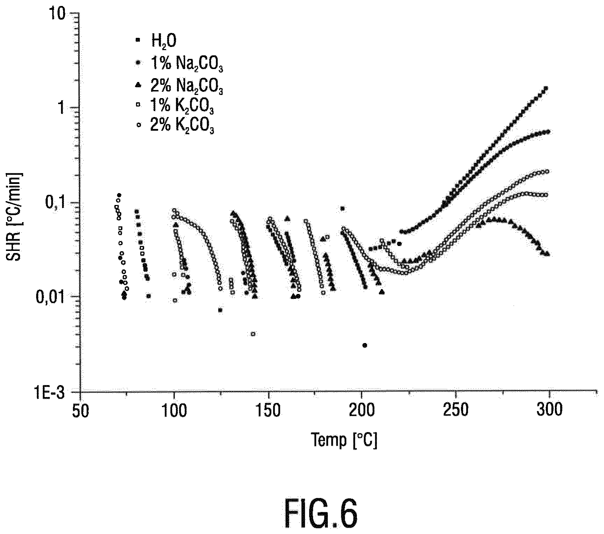

Daher wurde in einem weiteren Versuch die Referenz mit 1 bzw. 2 Gew.% Natriumcarbonat versetzt und untersucht. In Fig. 6 sind sämtliche Carbonatproben zusammengefasst. Es ist eine deutliche Abnahme der Selbstentzündungsneigung von der Referenz hin zu den Proben mit 1 Gew.% Carbonat zu erkennen. Die Probe mit 2 Gew.% weist zusätzlich zur niedrigeren Selbsterwärmung noch einen Peak bei ca. 270°C auf, ab dem die Selbsterwärmung wieder abnimmt. Diese Probe weist keine selbstbeschleunigte Aufheizung auf. Nach diesen Messungen ist eine höhere Konzentration Additiv (beispielsweise 2% statt 1%) hinsichtlich der hemmenden Eigenschaften zu bevorzugen.

### 4. Zusammenfassung

In den experimentellen Versuchen haben sich Fluorid und Carbonat als geeignete Zusatzstoffe erwiesen. Bei direkter Einarbeitung in die Formulierung zeigt Carbonat einen besseren Effekt als Fluorid, welches bei Vorversuchen mit älterem Poliermittelabfall geeigneter erschien. Die Auswahl des Kations (Natrium oder Kalium) scheint keinen Einfluss auf hemmende Wirkung des Additivs zu haben und kann im Rahmen der Formulierungsarbeit optimiert werden. Höhere Additivkonzentrationen wirken sich durch verminderte Selbstaufheizung positiv auf die Sicherheit der Abfälle aus.

Ferner konnte gezeigt werden, dass die Selbstentzündungsneigung auch bei Abfällen herabgesetzt werden kann, die bei Strahlverfahren oder Zerspanverfahren anfallen. Diese Abfälle bestehen üblicherweise primär aus Metallstaub bzw. Späne, Strahlgut und Wasser. Durch das Hinzufügen des Additivs reagieren die Metalle ab, sodass die Bildung des hochentzündlichen Wasserstoffs weitestgehend eingeschränkt werden kann und damit die Selbstentzündungsneigung auch dieses Abfalls herabgesetzt wird.

## Patentansprüche

1. Verfahren zur Oberflächenbearbeitung von Werkstücken mittels abrasiv wirksamer Mittel, umfassend die folgenden Schritte:
- Bereitstellung eines Bearbeitungswerkzeuges;
- Bereitstellung eines abrasiv wirksamen Mittels;
- Zuführen eines Werkstücks mit einer zu bearbeitenden Oberfläche;
- Oberflächenbearbeitung des Werkstücks, umfassend einen Materialabtrag, wobei Abfallprodukte entstehen; und
- Aufbereitung der Abfallprodukte, durch Benetzen der Abfallprodukte;
wobei zumindest einer der genannten Schritte Folgendes umfasst:
- Hinzufügung eines Additivs zur Herabsetzung einer Selbstentzündungsneigung der Abfallprodukte, wobei das Additiv ein Salz, aus einem Carbonat und/oder einem Halogenanion, enthält.

2. Verfahren nach Anspruch 1, wobei die zu bearbeitende Oberfläche des Werkstücks aus Magnesium, Magnesiumlegierungen, Aluminium, Aluminiumlegierungen, Titan, Titanlegierungen, Zink oder Zinklegierungen besteht.

3. Verfahren nach Anspruch 1 oder 2, wobei das Salz aus der Gruppe bestehend aus Natriumcarbonat, Kaliumcarbonat und Natriumfluorid ausgewählt wird.

4. Verfahren nach einem der vorhergehenden Ansprüche, wobei das Salz ein Fluorid enthält.

5. Verfahren nach einem der vorhergehenden Ansprüche, wobei die Aufbereitung der Abfallprodukte in einem Nassabscheider durchgeführt wird, umfassend die Entstehung von nassem Abfall, wobei die Hinzufügung des Additivs vorzugsweise innerhalb des Nassabscheiders und/oder in den nassen Abfall erfolgt.

6. Verfahren nach einem der vorhergehenden Ansprüche, wobei die Aufbereitung der Abfallprodukte eine Brikettierung umfasst, und wobei die Hinzufügung des Additivs vor dem Brikettieren erfolgt.

7. Verfahren nach einem der vorhergehenden Ansprüche, wobei das Bearbeitungswerkzeug als Schleifscheibe, Bürstscheibe, Polierscheibe, Zerspanwerkzeug oder als Strahlanlage ausgeführt ist.

8. Verfahren nach einem der Ansprüche 1 bis 6, wobei das Bearbeitungswerkzeug als Schleifscheibe, Bürstscheibe, Zerspanwerkzeug oder Polierscheibe ausgeführt ist und wobei das Additiv in/auf die Schleifscheibe, Bürstscheibe, Polierscheibe oder das Zerspanwerkzeug eingebracht und/oder aufgebracht ist.

9. Verfahren nach einem der vorhergehenden Ansprüche, wobei das abrasiv wirksame Mittel ein Poliermittel, Bürstmittel, Strahlgut, Schneidstoff oder Schleifmittel ist, wobei das Additiv vorzugsweise dem Poliermittel, Bürstmittel, Strahlgut, Schneidmittel oder Schleifmittel hinzugefügt wird.

10. Verfahren nach einem der vorhergehenden Ansprüche, wobei das Salz zu weniger als 10 Gew.%, bevorzugt weniger als 5 Gew.%, besonders bevorzugt weniger als 2,5 Gew.%, jedoch größer als 0,01 Gew.% in dem abrasiv wirksamen Mittel vorliegt.

11. Verwendung eines Additivs, welches ein Salz aus einem Carbonat und/oder einem Halogenanion enthält, zur Herabsetzung einer Selbstentzündungsneigung von nassen Abfallprodukten der Oberflächenbearbeitung, insbesondere von Polierfällen, Bürstabfällen, Strahlmittelabfällen, Schleifabfällen oder Zerspanabfälle.

12. Verwendung nach Anspruch 11, wobei das Salz aus der Gruppe bestehend aus Natriumcarbonat, Kaliumcarbonat und Natriumfluorid ausgewählt ist.

## Claims

1. Method for the surface treatment of workpieces by means of abrasive media, comprising the following steps:
- providing a treatment tool;
- providing an abrasive medium;
- supplying a workpiece having a surface to be treated;
- surface treating the workpiece, involving depletion of material, wherein waste products are formed; and
- processing the waste products, by wetting of the waste products;
wherein at least one of said steps comprises the following:
- adding an additive to lower a self-ignition tendency on the part of the waste products, the additive comprising a salt, composed of a carbonate and/or of a halogen anion.

2. Method as claimed in claim 1, wherein the workpiece surface to be treated consists of magnesium, magnesium alloys, aluminum, aluminum alloys, titanium, titanium alloys, zinc or zinc alloys.

3. Method as claimed in claim 1 or 2, wherein the salt is selected from the group consisting of sodium carbonate, potassium carbonate, and sodium fluoride.

4. Method as claimed in any of the preceding claims, wherein the salt comprises a fluoride.

5. Method as claimed in any of the preceding claims, wherein the processing of the waste products is carried out in a wet separator, involving the formation of wet waste, the additive being added preferably within the wet separator and/or to the wet waste.

6. Method as claimed in any of the preceding claims, wherein the processing of the waste products comprises briquetting, and wherein the additive is added before the briquetting.

7. Method as claimed in any of the preceding claims, wherein the treatment tool is configured as a grinding disk, brushing disk, polishing disk, machining tool or blasting system.

8. Method as claimed in any of claims 1 to 6, wherein the treatment tool is configured as a grinding disk, brushing disk, machining tool or polishing disk, and wherein the additive is introduced into and/or applied to the grinding disk, brushing disk, polishing disk or machining tool.

9. Method as claimed in any of the preceding claims, wherein the abrasive medium is a polishing composition, brushing composition, blasting medium, cutting material or grinding composition, with the additive being added preferably to the polishing composition, brushing composition, blasting medium, cutting material or grinding composition.

10. Method as claimed in any of the preceding claims, wherein the salt is present at less than 10 wt%, preferably less than 5 wt%, more preferably less than 2.5wt%, but greater than 0.01 wt% in the abrasive composition.

11. Use of an additive which comprises a salt composed of a carbonate and/or of a halogen anion for lowering a self-ignition tendency on the part of wet waste products from surface treatment, particularly of polishing cases, brushing wastes, blasting medium wastes, grinding wastes or machining wastes.

12. Use as claimed in claim 11, wherein the salt is selected from the group consisting of sodium carbonate, potassium carbonate, sodium fluoride.

## Revendications

1. Procédé pour le traitement de surface de pièces au moyen d'agents à action abrasive, comprenant les étapes suivantes :
- fourniture d'un outil de traitement ;
- fourniture d'un agent à action abrasive ;
- amenée d'une pièce comportant une surface à traiter ;
- traitement de surface de la pièce, comprenant un enlèvement de matière, dans lequel des déchets sont produits ; et
- conditionnement des déchets, par mouillage des déchets ;
dans lequel au moins l'une desdites étapes comprend ce qui suit :
- ajout d'un additif pour réduire une tendance à l'auto-inflammation des déchets, dans lequel l'additif contient un sel d'un carbonate et/ou d'un anion halogène.

2. Procédé selon la revendication 1, dans lequel la surface à traiter de la pièce est constituée de magnésium, d'alliages de magnésium, d'aluminium, d'alliages d'aluminium, de titane, d'alliages de titane, de zinc ou d'alliages de zinc.

3. Procédé selon la revendication 1 ou 2, dans lequel le sel est choisi dans le groupe constitué de carbonate de sodium, carbonate de potassium et fluorure de sodium.

4. Procédé selon l'une des revendications précédentes, dans lequel le sel contient un fluorure.

5. Procédé selon l'une des revendications précédentes, dans lequel le conditionnement des déchets est effectué dans un séparateur à voie humide, comprenant la formation de déchets humides, dans lequel l'ajout de l'additif est de préférence effectué à l'intérieur du séparateur à voie humide et/ou dans les déchets humides.

6. Procédé selon l'une des revendications précédentes, dans lequel le conditionnement des déchets comprend un briquetage, et dans lequel l'ajout de l'additif est effectué avant le briquetage.

7. Procédé selon l'une des revendications précédentes, dans lequel l'outil de traitement est réalisé sous la forme d'une meule, d'un disque à brosse, d'un disque à polir, d'un outil d'enlèvement de copeaux ou d'une unité de sablage.

8. Procédé selon l'une des revendications 1 à 6, dans lequel l'outil de traitement est réalisé sous la forme d'une meule, d'un disque à brosse, d'un outil d'enlèvement de copeaux ou d'un disque à polir, et dans lequel l'additif est introduit et/ou appliqué dans/sur la meule, le disque à brosse, le disque à polir ou l'outil d'enlèvement de copeaux.

9. Procédé selon l'une des revendications précédentes, dans lequel l'agent à action abrasive est un agent de polissage, un agent de brossage, un produit de sablage, une matière de coupe ou un agent de meulage, dans lequel l'additif est de préférence ajouté à l'agent de polissage, à l'agent de brossage, au produit de sablage, à l'agent de coupe ou à l'agent de meulage.

10. Procédé selon l'une des revendications précédentes, dans lequel le sel est présent à moins de 10 % en poids, de préférence à moins de 5 % en poids, de manière particulièrement préférée à moins de 2,5 % en poids, mais à plus de 0,01 % en poids dans l'agent à action abrasif.

11. Utilisation d'un additif qui contient un sel d'un carbonate et/ou d'un anion halogène pour réduire une tendance à l'auto-inflammation de déchets humides du traitement de surface, en particulier de déchets de polissage, de déchets de brossage, de déchets de sablage, de déchets de meulage ou de déchets d'enlèvement de copeaux.

12. Utilisation selon la revendication 11, dans laquelle le sel est choisi dans le groupe constitué de carbonate de sodium, carbonate de potassium et fluorure de sodium.
